# EUROPEAN PATENT SPECIFICATION

(11) **EP 0 779 841 B1**
(45) Date of publication and mention of the grant of the patent: **02.10.2002**
(21) Application number: 95930751.3
(22) Date of filing: 31.07.1995
(51) Int. Cl.: B05B 7/14, B65H 59/10

(54) **EJECTION NOZZLE**
EJEKTIONSDÜSE
BUSE D'EJECTION

(30) Priority: 29.08.1994 SE 9402874
(43) Date of publication of application: 25.06.1997
(73) Proprietor: APLICATOR SYSTEM AB, 435 33 Mölnlycke (SE)
(72) Inventor: SAND, Kjell, S-421 58 Västra Frölunda (SE)
(74) Representative: Hammond, Andrew
(86) International application number: PCT/SE95/00893
(87) International publication number: WO 96/006687

(56) References cited:
- WO-A-95/13992
- FR-A- 1 257 352

## Description

### TECHNICAL FIELD

The present invention refers to an ejection nozzle for transport of fibre thread pieces by means of compressed air, e.g. reinforcement material for manufacturing fibre reinforced plastic products, from a cutter to a moulding cavity, which nozzle is provided with a common flow duct for the compressed air and the fibre thread pieces.

### BACKGROUND OF THE INVENTION

In robot-controlled production of fibre reinforced plastic products, fibre thread pieces are fed out into a moulding cavity while being oriented, so that the strength of the fibres is utilized efficiently in the finished product. Compressed air is used for the transport of the cut fibre pieces from the cutter to the moulding cavity.

If the pressure/speed of the compressed air is not sufficiently high at the cutter, static electricity will make fibre pieces stick to the vicinity of the cutter, so that the feeding out is stopped up. This may be economically seriously damaging if the operations at a production line which depends upon said plastic details, is also influenced by the production loss.

However, if air pressure/speed is too high at the moulding cavity, fibre pieces may be oriented wrongly in said cavity, simply by being blown away from their intended location, or because they are deflected from the mould surface by having to high kinetic energy.

The problems can be reduced if it is possible to maintain an optimal distance between the feed out apparatus and the moulding cavity. However, this is hardly ever possible, e.g. because of lack of space.

From WO-A-95 13992 is known an ejection nozzle for transport of fibre thread pieces by means of compressed air, e.g. reinforcement material for manufacturing fibre reinforced plastic products, from a cutter to a moulding cavity, which nozzle is provided with a common flow duct for the compressed air and the fibre thread pieces, wherein the flow duct runs past at least one reflector surface for the air flow, and where at least one opening for evacuation of air to the surroundings is located along the flow duct.
In this ejection nozzle the reflector surface is arranged substantially at right angle to the incoming flow, in order to subject fibre bundles to a turbulent air flow causing the fibres to be bent and scattered in all direction to form a "woolly tuft".

### THE TECHNICAL PROBLEM

The object of the present invention is to provide an ejection nozzle for feeding out fibre thread pieces from a cutter, which makes it possible to maintain a high air pressure/velocity at the cutter and at the same time avoid that the fibres end up wrong in the moulding cavity, or outside the same.

### THE SOLUTION

For this purpose, the ejection nozzle according to the invention is characterized in that the reflector surface is provided with a cross section which is tapering in the direction of flow, and which runs between a first tube part and a second tube part with a smaller diameter than said first tube part.

### DESCRIPTION OF THE DRAWINGS

The invention will be described here below with reference to an embodiment shown in the accompanying drawings, in which
- Fig. 1: is a side view of a damper unit according to the invention,
- Fig. 2: is an end view of the damper unit in Fig. 1, and
- Fig. 3: shows a series of units according to Fig. 1 and 2 joined together into an ejector nozzle.

### DESCRIPTION OF EMBODIMENTS

The ejector nozzle shown in Fig. 3 is used mounted upon a not shown robot arm, for feeding out fibre thread pieces from a likewise not shown cutter to a moulding cavity. The robot arm is preferably freely movable in space and is controlled by a programmable micro processor.

The ejector nozzle in Fig. 3 is carried by and is supplied with compressed air and fibre thread pieces via an ejector tube 10. The nozzle comprises in the shown embodiment a series of three damper units 11.

Together, the ejector tube 10 and the damper unit 11 form a flow duct with varying diameter for the compressed air and the fibre thread pieces. Thus, the ejector tube 10 form a first section of the flow duct, which protrudes into and carries a first damper unit 11. This damper unit in its turn protrudes into and carries a second damper unit, which in its turn carries a third damper unit 11.

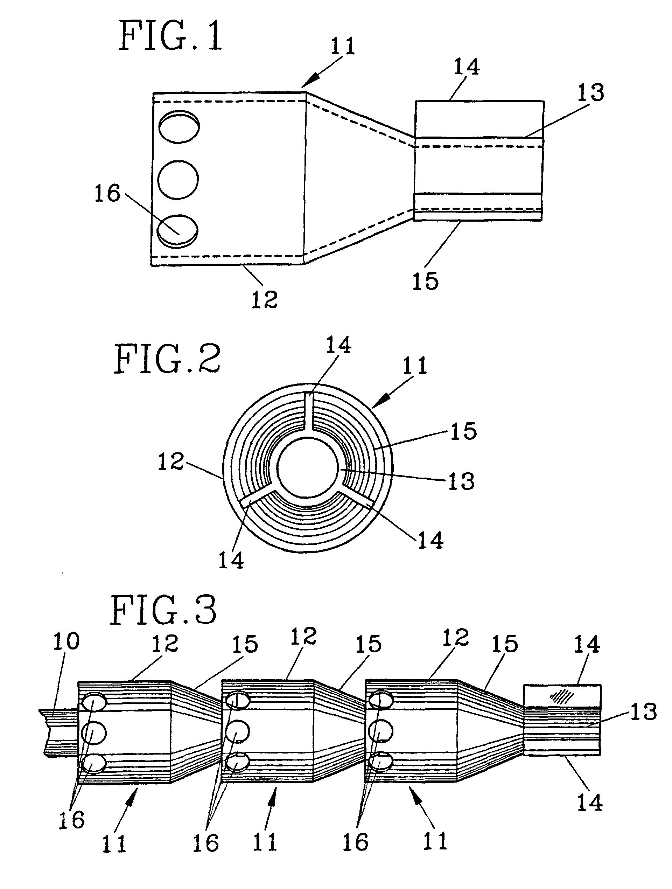

As is shown in Fig. 1 and 2, each damper unit 11 comprises a first cylindric tube part 12 and a second tube part 13 with a cross section 13 which is reduced in relation to the first tube part 12. The tube part 13 forms a bracket means with three radially protruding wings 14.

The tube part 13 with the bracket means 14 is entirely protruding into the cylindrical tube part 12 on the next following damper unit 11, in such a way that the wings 14 are centring the units along a common longitudinal axis.

The cylindrical tube part 12 and the tube part 13 with the bracket means 14 are interconnected via tube part 15 which tapers conically in the direction of flow. In its position of use, the tube part 15 which tapers in the direction of air flow forms a reflection surface for the air flow, so that it is slowed down. Thus, the tube part 15 creates a local increase in pressure in front of the mouth of the flow duct tube part 13, which forces air to flow back along the outside of the ejector tube 10 and the outside of the previous damper unit tube part 13, respectively, between the three wings 14 and to evacuate to the surrounding atmosphere. For this purpose, there are also holes 16 drilled in the cylindric tube part 12.

While the air stream in this way is slowed down step by step via the damper units 11, the fibre thread pieces which have initially been accelerated by the air stream may on the whole maintain its kinetic energy during the passage through the ejector nozzle. This implies that the range is maintained for the fibre pieces, and that the air flow at the end of the ejector nozzle is so reduced, that it is not able to disturb the already transported fibres in the moulding.

It is simple to adapt the ejector nozzle according to the invention to different modes of application by selecting a suitable number of damper units.

The invention is not limited to the above described embodiment, but several variants are possible within the scope of the accompanying claims. For example, the tube parts 12, 13 of the damper units do not have to be cylindric. The shape of the reflector surface 15 can also vary within wide limits. The holes 16 are not necessary for the invention, because air can leave between the end edge of the tube part 12 and the outside of the reflector wall 15. Also, the diameter of the tube parts 13 may vary between the damper units 11 along the flow duct, so that the last tube part 13 in the direction of flow has a reduced diameter.

## Claims

1. An ejection nozzle for transport of fibre thread pieces by means of compressed air, e.g. reinforcement material for manufacturing fibre reinforced plastic products, from a cutter to a moulding cavity, which nozzle is provided with a common flow duct for the compressed air and the fibre thread pieces, wherein the flow duct runs past at least one reflector surface (15) for the air flow, and that at least one opening (16) for evacuation of air to the surroundings is located along the flow duct,
**characterized in that** the reflector surface (15) is provided with a cross section which is tapering in the direction of flow, and which runs between a first tube part (12) and a second tube part (13) with a smaller diameter than said first tube part.

2. A nozzle according to claim 1,
**characterized in that** the reflector surface (15) forms a damper unit (11) together with the two tube parts (12, 13).

3. A nozzle according to claim 2,
**characterized in that** it comprises a series of damper units (11).

4. A nozzle according to claim 3,
**characterized in that** the second tube part (13) is provided with a bracket means (14) for the next following damper unit (11).

5. A nozzle according to claim 4,
**characterized in that** the bracket means (14) comprise wings protruding radially from the mantle surface.

6. A nozzle according to claim 4,
**characterized in that** the bracket means (14) cooperate with the first tube part (12) on the next following damper unit (11).

7. A nozzle according to claim 1,
**characterized in that** the reflector surface (15) is conically tapering.

## Patentansprüche

1. Ausstoßdüse zum Transport von Faserstücken mittels Druckluft, zum Beispiel Verstärkungsmaterial für die Fertigung faserverstärkter Kunststofferzeugnisse, von einer Schneidvorrichtung in eine Hohlform, wobei die Düse mit einem gemeinsamen Strömungskanal für die Druckluft und die Faserstücke versehen ist, wobei der Strömungskanal an mindestens einer Reflektorfläche (15) für den Luftstrom vorbei verläuft, und wobei mindestens eine Öffnung (16) zum Abgeben der Luft an die Umgebung an dem Strömungskanal angeordnet ist,
**dadurch gekennzeichnet, dass** die Reflektorfläche (15) einen in Strömungsrichtung schmaler werdenden Querschnitt aufweist, der zwischen einem ersten Rohrteil (12) und einem zweiten Rohrteil (13) mit einem geringeren Durchmesser als dem des ersten Rohrteiles verläuft.

2. Düse nach Anspruch 1,
**dadurch gekennzeichnet, dass** die Reflektorfläche (15) zusammen mit den beiden Rohrteilen (12, 13) eine Dämpfereinheit (11) bildet.

3. Düse nach Anspruch 2,
**dadurch gekennzeichnet, dass** sie eine Reihe von Dämpfereinheiten (11) aufweist.

4. Düse nach Anspruch 3,
**dadurch gekennzeichnet, dass** der zweite Rohrteil (13) mit einer Klemmeinrichtung (14) für die nächstfolgende Dämpfereinheit (11) versehen ist.

5. Düse nach Anspruch 4,
**dadurch gekennzeichnet, dass** die Klemmeinrichtung (14) Flügel aufweist, die radial von der Manteloberfläche abstehen.

6. Düse nach Anspruch 4,
**dadurch gekennzeichnet, dass** die Klemmeinrichtung (14) gemeinsam mit dem ersten Rohrteil (12) auf die nächstfolgende Dämpfereinheit (11) einwirkt.

7. Düse nach Anspruch 1,
**dadurch gekennzeichnet, dass** die Reflektorfläche (15) konisch zuläuft.

## Revendications

1. Buse d'éjection destinée au transport de morceaux de fil de fibre par l'intermédiaire d'air comprimé, par exemple un matériau de renforcement pour la fabrication de produits en matière plastique renforcée de fibre, à partir d'un couteau vers une cavité de moulage, laquelle buse est munie d'un conduit d'écoulement commun pour l'air comprimé et les morceaux de fil de fibre, le conduit d'écoulement s'étendant au-delà d'au moins une surface réflectrice (15) pour l'écoulement d'air, et au moins une ouverture (16) destinée à l'évacuation de l'air vers l'environnement est positionnée le long du conduit d'écoulement,
**caractérisée en ce que** la surface réflectrice (15) est munie d'une section transversale qui diminue dans la direction de l'écoulement, et qui s'étend entre une première partie de tube (12) et une seconde partie de tube (13) ayant un diamètre plus petit que ladite première partie de tube.

2. Buse selon la revendication 1,
**caractérisée en ce que** la surface réflectrice (15) forme une unité d'amortissement (11) en association avec les deux parties de tube (12, 13).

3. Buse selon la revendication 2,
**caractérisée en ce qu'**elle comporte une série d'unités formant amortisseur (11).

4. Buse selon la revendication 3,
**caractérisée en ce que** la seconde partie de tube (13) est munie de moyens formant support (14) pour l'unité formant amortisseur suivante (11).

5. Buse selon la revendication 4,
**caractérisée en ce que** les moyens formant support (14) comportent des ailes faisant saillie radialement à partir de la surface de l'enveloppe extérieure.

6. Buse selon la revendication 4,
**caractérisée en ce que** les moyens formant support (14) coopèrent avec la première partie de buse (12) de l'unité formant amortisseur immédiatement suivante (11).

7. Buse selon la revendication 1,
**caractérisée en ce que** la surface réflectrice (15) est inclinée de manière conique.
